# EUROPÄISCHE PATENTSCHRIFT

(11) **EP 3 225 885 B1**
(45) Veröffentlichungstag und Bekanntmachung des Hinweises auf die Patenterteilung: **22.12.2021**
(21) Anmeldenummer: 17162014.9
(22) Anmeldetag: 21.03.2017
(51) Int. Cl.: F16H 61/02

(54) **VERFAHREN UND STEUERVORRICHTUNG ZUM WÄHLEN EINES GANGES EINES GETRIEBES IN EINEM ANTRIEBSSTRANG EINES KRAFTFAHRZEUGS**
METHOD AND CONTROL DEVICE FOR SELECTING A GEAR OF A GEARBOX IN A DRIVETRAIN OF A MOTOR VEHICLE
PROCÉDÉ ET DISPOSITIF DE COMMANDE DESTINÉS À SÉLECTIONNER UN RAPPORT DE TRANSMISSION DANS UN GROUPE MOTOPROPULSEUR D'UN VÉHICULE AUTOMOBILE

(30) Priorität: 21.03.2016 DE 102016204657
(43) Veröffentlichungstag der Anmeldung: 04.10.2017
(73) Patentinhaber: VOLKSWAGEN AKTIENGESELLSCHAFT, 38440 Wolfsburg (DE)
(72) Erfinder: RIELING, Jörg, 38116 Braunschweig (DE); WACHSMUTH, Guido, 14059 Berlin (DE)
(74) Vertreter: MFG Patentanwälte Meyer-Wildhagen Meggle-Freund Gerhard PartG mbB

(56) Entgegenhaltungen:
- DE-A1-102009 043 205
- DE-A1-102013 020 079
- FR-A1- 2 866 284

## Beschreibung

Die Erfindung betrifft ein Verfahren und eine Steuervorrichtung zum Wählen eines Ganges eines Getriebes in einem Antriebsstrang eines Kraftfahrzeugs. Weiterhin betrifft die Erfindung ein Kraftfahrzeug mit einem Getriebe und einer solchen Steuervorrichtung.

Heutzutage wird in den meisten herkömmlichen Automatikfahrzeugen ein von einem Motor des Automatikfahrzeugs zu stellendes Motormoment aus einer Drehzahl des Motors und einer Fahrpedalstellung bestimmt, beispielsweise mittels eines Fahrer-Wunsch-Kennfeldes. Unabhängig von dem zu stellenden Motormoment ergibt sich gleichzeitig aus einer Fahrgeschwindigkeit des Automatikfahrzeugs und einer Fahrpedalstellung eine Getriebeübersetzung bzw. ein einzustellender Gang. Ein tatsächliches Radmoment ergibt sich dann als Produkt aus der Übersetzung und dem Motormoment. Damit wird das Radmoment sowohl von einer Motorsteuerung als auch einer Getriebesteuerung beeinflusst, da das Motormoment und die Übersetzung unabhängig voneinander bestimmt werden.

Alternativ wird in einigen anderen Fahrzeugkonzepten zunächst ein Radwunschmoment bestimmt (Radmomentenkonzept). Dieses ergibt sich beispielsweise aus einer Fahrgeschwindigkeit und der Fahrpedalstellung. Gleichzeitig wird wiederum aus der Geschwindigkeit und der Fahrpedalstellung eine Getriebeübersetzung berechnet, die jedoch unabhängig vom Radwunschmoment ist. Das vom Motor gestellte Motormoment ergibt sich als Quotient aus dem Radwunschmoment und der eingestellten Übersetzung. Das Motormoment passt sich also der momentanen Getriebeübersetzung so an, dass das tatsächliche Radmoment stets dem vorgegebenen Radwunschmoment entspricht, unabhängig von der Getriebeübersetzung.

Die Übersetzung von Automatikgetrieben wird häufig mit Hilfe von Schaltkennfeldern über Hoch- und Rückschaltkennlinien gesteuert. Dazu ist in den Automatikgerieben üblicherweise ein Softwaremodul vorgesehen, welches in Abhängigkeit von verschiedenen Parametern eine Sollgangvorgabe vornimmt. Typischerweise weist dieses Softwaremodul abhängig von einer aktuellen Fahrgeschwindigkeit und/oder einer Quellendrehzahl sowie einer aktuellen Fahrpedalstellung einen Sollgang an.

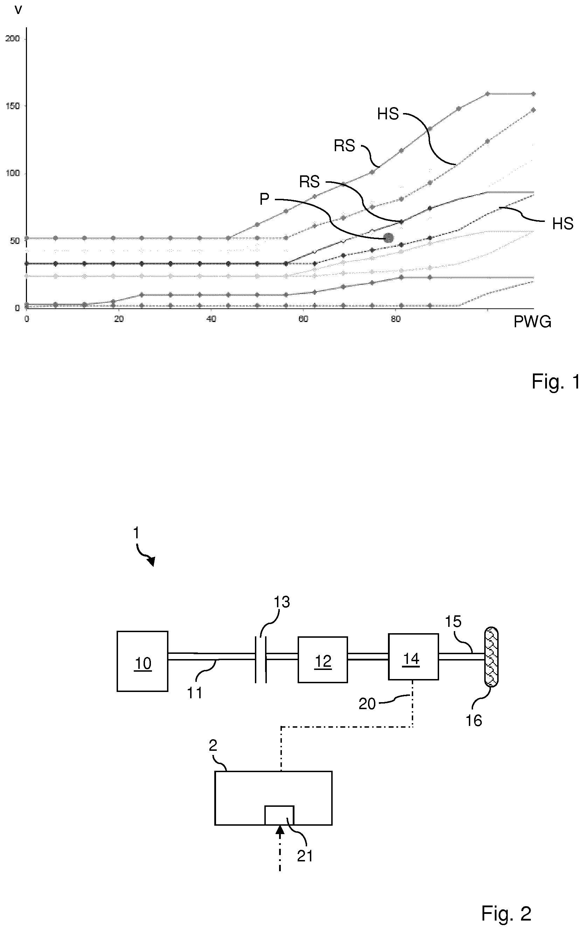

Ein typisches Beispiel für ein Schaltkennfeld mit Hoch- und Rückschaltkennlinien HS, RS ist in Fig. 1 dargestellt. In Fig. 1 wird das Fahrzeug als Punkt P repräsentiert, der sich abhängig von einer Fahrpedalstellung PWG und einer Fahrzeuggeschwindigkeit v durch das Schaltkennfeld bewegt. Wenn der Punkt P eine Hochschalt- oder Rückschaltkennlinie HS, RS kreuzt, wird eine Hoch- bzw. Rückschaltung ausgelöst. Schaltkennfelder sind üblicherweise im wesentlichen phänomenologisch bedatet. Außerdem sind sie statisch appliziert für verschiedene Fahrsituationen wie beispielsweise ökologisch Fahren (Öko oder Eco), sportlich Fahren (Sport), elektrisch Fahren (E-Fahren), Fahren auf einer Straße mit einer vorgegebenen Steigung, Fahren in einer vorgegebenen Höhenlage oder andere Fahrsituationen.

Die DE 10 2010 041 969 A1 beschreibt ein Verfahren zur Schaltsteuerung eines automatisierten Stufenschaltgetriebes auf Grundlage aktueller Parameter und topographischer Daten. Dabei werden für unterschiedliche Höhenprofile jeweils Sollgangverläufe, also Rück-und Hochschaltlinien, hinterlegt, die abhängig von der Art eines vorausliegenden Streckenabschnitts zur Steuerung der Übersetzung eingesetzt werden.

Schaltkennfelder haben sich bisher bewährt, weil sich in jeder Lebenslage ein gewünschtes, insbesondere sinnlich erfahrbares Schaltverhalten explizit bedaten lässt. Allerdings ist der Bedatungsprozess oft sehr arbeits- und speicherintensiv. Außerdem ist das Resultat des Bedatungsprozesses meistens nicht verbrauchsoptimal, insbesondere bei Hybridfahrzeugen mit variablen Lastpunktverschiebungen. Weiterhin wird bei der Bedatung von konstanten Charakteristiken der Momentenquellen ausgegangen, so dass insbesondere in elektrifizierten Antriebssträngen mit elektrischer Maschine deren variable Charakteristik nicht oder nur durch komplexe Änderungen im Schaltprogramm berücksichtigt werden kann. Zudem können unterschiedliche Energiekosten der Batterie nicht sinnvoll berücksichtigt werden, beispielsweise beim Einsatz einer Boostfunktion oder bei der Verwendung prädiktiver Streckendaten.

Die DE 10 2013 103 797 A1 beschreibt ein Verfahren zum Betreiben eines Automatikfahrzeugs. Dabei wird eine Abtriebsleistung bzw. eine Konstantfahrleistung, die zum Aufrechterhalten einer Konstantfahrt bzw. einer konstantfahrähnlichen Situation nötig ist, bestimmt. Aus der Konstantfahrleistung wird dann ein Motordrehzahlpunkt bestimmt und aus einem Momentenquellen-Wirkungsgradkennfeld dann der optimale Gang gewählt. Allerdings ist das Verfahren auf eine Konstantfahrt oder eine konstantfahrähnliche Situation beschränkt und damit nur bedingt einsetzbar.

Die DE 10 2009 043 205 A1 und die DE 10 2013 020 079 A1 offenbaren Verfahren zum Auswählen eines Gangs eines Getriebes auf Grundlage eines Kraftstoffverbrauchs der Gänge.

Aufgabe der vorliegenden Erfindung ist es, ein Verfahren und eine Steuervorrichtung zum Wählen eines Ganges eines Getriebes in einem Antriebsstrang eines Kraftfahrzeugs bereitzustellen, die die oben genannten Nachteile wenigstens teilweise überwinden.

Diese Aufgabe wird durch das erfindungsgemäße Verfahren zum Wählen eines Ganges eines Getriebes in einem Antriebsstrang eines Kraftfahrzeugs nach Anspruch 1 und die erfindungsgemäße Steuervorrichtung zum Wählen eines Ganges eines Getriebes in einem Antriebsstrang eines Kraftfahrzeugs nach Anspruch 13 gelöst.

Gemäß einem ersten Aspekt betrifft die Erfindung ein Verfahren zum Wählen eines Ganges eines Getriebes in einem Antriebsstrang eines Kraftfahrzeugs, umfassend:
Erhalten einer von einer Fahrpedalstellung abhängigen Größe; Berechnen eines Antriebsstrangparameters für wenigstens zwei Gänge des Getriebes; und Auswählen eines Sollgangs auf Grundlage der berechneten Antriebsstrangparameter unter Berücksichtigung der von der Fahrpedalstellung abhängigen Größe.

Gemäß einem zweiten Aspekt betrifft die Erfindung eine Steuervorrichtung zum Wählen eines Ganges eines Getriebes in einem Antriebsstrang eines Kraftfahrzeugs, wobei die Steuervorrichtung dazu ausgebildet ist, ein Verfahren zum Wählen eines Ganges eines Getriebes in einem Antriebsstrang eines Kraftfahrzeugs nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Wählen eines Ganges eines Getriebes, insbesondere eines Automatikgetriebes oder eines Handschaltgetriebes, in einem Antriebsstrang eines Kraftfahrzeugs. Das Automatikgetriebe kann ein automatisiertes gestuftes Getriebe, beispielsweise ein Doppelkupplungsgetriebe, oder ein Wandler-Automatik-Getriebe sein. Der Antriebsstrang des Kraftfahrzeugs kann ein klassischer, rein verbrennungsmotorischer Antriebsstrang mit einer Verbrennungskraftmaschine, beispielsweise einem Ottomotor oder einem Dieselmotor, einem Anfahrelement und dem Getriebe oder ein hybridischer Antriebsstrang, beispielsweise ein Antriebsstrang eines Parallelhybrids, mit einer Verbrennungskraftmaschine, beispielsweise einem Ottomotor oder einem Dieselmotor, einer Trennkupplung, einer elektrischen Antriebsmaschine, einem Anfahrelement und dem Getriebe sein. Der hybridische Antriebsstrang kann vorzugsweise als Full-Hybrid-Antrieb oder als Mild-Hybrid-Antrieb ausgebildet sein. Vorzugsweise kann der hybridische Antriebsstrang ein hybridischer Antriebsstrang mit variabler Lastpunktverschiebung sein.

Das erfindungsgemäße Verfahren kann an eine Steuerungsstrategie anknüpfen, bei der Quellenmomente von Momentenquellen und deren Übersetzung, beispielsweise ein Quellenmoment wie ein Motormoment und ein Gang des Getriebes, so eingestellt werden, dass ein Radwunschmoment (Sollradmoment) wirkt. Dabei dient eine Fahrpedalstellung als Vorgabe für das Radwunschmoment. Alternativ kann das erfindungsgemäße Verfahren an eine Steuerungsstrategie anknüpfen, bei der der Antriebsstrang in Abhängigkeit zu stellender Quellenmomente der Momentenquellen gesteuert wird. Dabei dient die Fahrpedalstellung als Vorgabe für Quellenmomente und nicht für das Radwunschmoment. Die Fahrpedalstellung kann eine Stellung eines Gasbetätigungselements, beispielsweise eines Gaspedals oder eines Gashebels umfassen.

Gemäß dem erfindungsgemäßen Verfahren wird eine von einer Fahrpedalstellung abhängige Größe, beispielsweise ein Radwunschmoment oder eine gewünschte Fahrleistung, erhalten. Weiterhin wird für wenigstens zwei Gänge des Getriebes, vorzugsweise alle Gänge des Getriebes, ein Antriebsstrangparameter berechnet. Auf Grundlage der berechneten Antriebsstrangparameter wird dann unter Berücksichtigung der von der Fahrpedalstellung abhängigen Größe der Sollgang ausgewählt.

Somit kann mittels einer physikalischen Modellierung des Antriebsstrangs eine Sollgangvorgabe getroffen werden. Dabei sind Schaltkennlinienauslegungstools überflüssig und der hohe Bedatungsaufwand fällt weg. Das erfindungsgemäße Verfahren ist speichereffizient, gut industrialisierbar und ermöglicht eine kraftstoffoptimale Schaltentscheidung und eine einfache Einbettung in Offline-Simulationstools, wie sie heutzutage in der Fahrzeugentwicklung eingesetzt werden.

In einem Automatikfahrzeug mit Automatikgetriebe kann das Verfahren zum Wählen eines Ganges des Getriebes zum Steuern des Automatikgetriebes bzw. zum Anweisen eines Ganges eingesetzt werden. In einem Fahrzeug mit Handschaltung kann das Verfahren alternativ zum Bereitstellen einer Schaltempfehlung, die beispielsweise über eine Anzeige angezeigt werden kann, eingesetzt werden. Das Verfahren kann auch anderweitig zum Einsatz kommen.

In manchen Ausführungsbeispielen kann die von der Fahrpedalstellung abhängige Größe ein Radwunschmoment oder eine gewünschte Fahrleistung sein. Die Fahrpedalstellung kann insbesondere eine aktuelle Fahrpedalstellung sein. Alles nachfolgend in Bezug auf das Radwunschmoment Beschriebene gilt analog auch für andere von der Fahrpedalstellung abhängige Größen wie beispielsweise die gewünschte Fahrleistung.

Die von der Fahrpedalstellung abhängige Größe, beispielsweise das Radwunschmoment, kann auf Grundlage der Fahrpedalstellung, insbesondere der aktuellen Fahrpedalstellung, und gegebenenfalls einer Fahrgeschwindigkeit des Kraftfahrzeugs, insbesondere einer aktuellen Fahrgeschwindigkeit, berechnet werden oder berechnet sein und empfangen werden. Alternativ, kann aus einem Quellenmoment bzw. aus Quellmomenten eine Sollradmomentencharakteristik abgeleitet werden, die das Radwunschmoment näherungsweise abbildet. Damit kann unabhängig von der zugrundeliegenden Steuerstrategie ein Radwunschmoment erhalten werden und von dem Vorteil der einfachen Bedatung und der kraftstoffoptimalen Gangwahl Gebrauch gemacht werden.

Die von der Fahrpedalstellung abhängige Größe, beispielsweise das Radwunschmoment, kann weiterhin in Abhängigkeit einer Umgebungsbedingung und/oder einem aktuellen Zustand des Kraftfahrzeugs bestimmt werden. Zum Beispiel kann das Radwunschmoment abhängig von einer Steigung, beispielsweise einer Steigung eines Streckenabschnitts, in dem sich das Fahrzeug befindet, eines Fahrwiderstands, und/oder einer anderen Umgebungsbedingung bestimmt werden. Zusätzlich oder alternativ kann das Radwunschmoment in Abhängigkeit von einem Fahrprogramm und/oder einer aktuellen Betriebsart des Kraftfahrzeugs bestimmt werden. Zusätzlich oder alternativ kann das Radwunschmoment in Abhängigkeit von einer Veränderung der Fahrgeschwindigkeit, einer Laufzeit seit einem Kaltstart, einer Quelltemperatur beispielsweise der Verbrennungskraftmaschine, einer Abtriebsdrehzahl, einem Bremsdruck oder einem anderen aktuellen Zustand des Kraftfahrzeugs bestimmt werden.

Zum Beispiel kann das Fahrprogramm in Abhängigkeit der Steigung und/oder des Fahrwiderstands gewählt werden. Entspricht die Steigung einem vorgegebenen Anstieg, beispielsweise einem Anstieg von 20% oder mehr, so kann zum Beispiel ein Bergauf-Fahrprogramm ausgewählt werden; entspricht die Steigung einem vorgegebenen Abfall, beispielsweise einem Abfall von 20% oder mehr, so kann zum Beispiel ein Bergab-Fahrprogramm ausgewählt werden. Das in Abhängigkeit der Steigung gewählte Fahrprogramm weist im Vergleich zu einem steigungsunabhängigen Fahrprogramm oder einem Fahrprogramm, das für das Fahren in einer Ebene geeignet ist, vorzugsweise einen veränderten Zusammenhang zwischen dem Radwunschmoment einerseits und der Fahrpedalstellung und der Fahrgeschwindigkeit andererseits auf. Zum Beispiel kann sich in dem Bergauf-Fahrprogramm bei gegebener Fahrpedalstellung und gegebener Fahrgeschwindigkeit ein höheres Radwunschmoment als in dem steigungsunabhängigen oder für die Ebene ausgelegten Fahrprogramm ergeben. Entsprechend kann sich in dem Bergab-Fahrprogramm bei gegebener Fahrpedalstellung und Bremspedalstellung und gegebener Fahrgeschwindigkeit ein niedrigeres Radwunschmoment als in dem steigungsunabhängigen oder für die Ebene ausgelegten Fahrprogramm ergeben.

Das Fahrprogramm kann auch in Abhängigkeit der Veränderung der Fahrgeschwindigkeit gewählt werden. Zum Beispiel kann bei einer vorgegebenen Verringerung der Fahrgeschwindigkeit während eines Bremsvorgangs ein Brems-Fahrprogramm ausgewählt werden. In dem Brems-Fahrprogramm ergibt sich ein geeignet definiertes negatives Radwunschmoment, das beispielsweise bremsdruckabhängig und/oder bremswegabhängig sein kann.

Alternativ kann beispielsweise durch einen Fahrer ein Sport-Programm angefordert werden. In dem Sport-Programm ist der Zusammenhang zwischen dem Radwunschmoment einerseits und der Fahrpedalstellung und der Fahrgeschwindigkeit andererseits dahingehend verändert, dass sich bei gegebener Fahrpedalstellung und gegebener Fahrgeschwindigkeit ein höheres Radwunschmoment ergibt als in einem für eine nicht sportliche Fahrt (ruhige Fahrt) oder eine kraftstoffsparende Fahrt ausgelegten Fahrprogramm. Diese Veränderung kann vorzugsweise abhängig von einem geeignet und gegebenenfalls fortlaufend bestimmten Sportlichkeitsfaktor sein.

Das Verfahren zum Wählen eines Sollgangs kann vorzugsweise auf Eingabegrößen basieren, die für einen Teil-Antriebstrang gelten, für den die Gangwahl getroffen werden soll. Beispielsweise kann daher das Berechnen des Radwunschmoments das Berechnen eines Radwunschmoments für eine Achse, mit der die Verbrennungskraftmaschine gekoppelt ist, beispielsweise für eine Vorderachse oder für eine Hinterachse, umfassen oder daraus bestehen.

Das Radwunschmoment kann in Abhängigkeit von Quellen-Momentencharakteristiken (Quellenkennfelder), die für unterschiedliche Bedingungen variieren, bestimmt werden. Die Quellenkennfelder der Verbrennungskraftmaschine und/oder der elektrischen Antriebsmaschine können über eine externe Schnittstelle, beispielsweise eine CAN-Schnittstelle, empfangen werden oder über Umgebungsdaten und /oder Zustandsparameter des Kraftfahrzeugs, beispielsweise die Höhe, eine Ansauglufttemperatur, eine Umgebungstemperatur der Verbrennungskraftmaschine und/oder andere Umgebungsdaten bzw. Zustandsparameter, in Kombination mit festapplizierten, vorher bekannten Quellenkennfeldern errechnet werden.

In manchen Ausführungsbeispielen kann beim Berechnen der Antriebsstrangparameter und/oder beim Auswählen des Sollgangs ein aktueller Zustand des Kraftfahrzeugs und/oder ein Sollzustand des Kraftfahrzeugs berücksichtigt werden. Beispielsweise kann ein aktueller Gang oder eine Zeitspanne, über die ein bestimmter Gang als Sollgang ausgewählt wird, berücksichtigt werden. Es kann auch berücksichtigt werden, ob ein bestimmter Gang voraussichtlich über eine bestimmte Zeitspanne vorgegebene Bedingungen erfüllt.

In manchen Ausführungsbeispielen kann der berechnete Antriebsstrangparameter ein erzielbares Radmoment des Antriebsstrangs, eine Antriebsdrehzahl des Antriebsstrangs, eine erzielbare Leistung des Antriebsstrangs, ein Primärenergieverbrauch des Antriebstrangs und/oder ein anderer Parameter sein, der einen Zustand des Antriebsstrangs definiert.

Beispielsweise kann für einige oder alle Gänge des Getriebes als Antriebsstrangparameter ein erzielbares Radmoment des Antriebsstrangs, beispielsweise ein bei gegebener Fahrgeschwindigkeit erzielbares Radmoment, berechnet werden. In Abhängigkeit des berechneten erzielbaren Radmoments kann eine Momentenentscheidung getroffen werden, um den Sollgang auszuwählen. Bei der Momentenentscheidung kann das erzielbare Radmoment mit dem Radwunschmoment und gegebenenfalls mit weiteren bestehenden Momentenanforderungen, beispielsweise Momentenanforderungen für eine Wiederstartreserve zum Starten der Verbrennungskraftmaschine in einem Hybridfahrzeug, verglichen werden. Anschließend kann auf Grundlage eines Vergleichsergebnisses eine Menge an momententechnisch möglichen Gängen bestimmt werden, d.h. eine Menge an Gängen, in denen das Radwunschmoment umgesetzt werden kann. Alternativ kann bei der Momentenentscheidung nur der momententechnisch höchstmögliche Gang (Radmomentengrenzgang) oder der momententechnisch höchstmögliche Gang (oberer Radmomentengrenzgang) und der momententechnisch kleinstmögliche Gang (unterer Radmomentengrenzgang) bestimmt werden. Dadurch kann ein Fahrervortriebswunsch erfüllt werden und die Fahrbarkeit des Fahrzeugs verbessert werden.

Alternativ oder zusätzlich kann für einige oder alle Gänge des Getriebes als Antriebsstrangparameter eine erzielbare Leistung des Antriebsstrangs, beispielsweise eine bei gegebener Fahrgeschwindigkeit erzielbare Leistung, berechnet werden und in Abhängigkeit der berechneten erzielbaren Leistung eine Leistungsentscheidung getroffen werden, um den Sollgang auszuwählen. Bei der Leistungsentscheidung kann die erzielbare Leistung mit einer gewünschten Fahrleistung, die sich aus der Fahrgeschwindigkeit und dem Radwunschmoment ergeben kann, und gegebenenfalls mit einer separat einzukoordinierenden Lastpunktverschiebungsleistung, die sich beispielsweise aus einem erhöhten Bordnetzverbrauch ergeben kann, und/oder mit weiteren Leistungsanforderungen, die beispielsweise durch Nebenaggregate wie eine Klimaanlage hervorgerufen werden können, verglichen werden. Anschließend kann auf Grundlage eines Vergleichsergebnisses eine Menge an leistungstechnisch möglichen Gängen ermittelt werden, d.h. eine Menge an Gängen, in denen die gewünschte Fahrleistung und gegebenenfalls die Lastpunktverschiebungsleistung und/oder die weiteren Leistungsanforderungen erreicht werden können. Alternativ kann bei der Leistungsentscheidung nur der leistungstechnisch höchstmögliche Gang (oberer Leistungsgrenzgang) oder der leistungstechnisch höchstmögliche Gang (oberer Leistungsgrenzgang) und der leistungstechnisch kleinstmögliche Gang (unterer Leistungsgrenzgang) bestimmt werden. Dadurch kann z.B. eine Bordnetzdeckung ermöglicht werden.

Weiter alternativ oder zusätzlich kann für einige oder alle Gänge des Getriebes als Antriebsstrangparameter eine Antriebsdrehzahl des Getriebes berechnet werden, bei der bei gegebener Fahrgeschwindigkeit Grenzdrehzahlbereiche eingehalten werden können. In Abhängigkeit von vorgegebenen Grenzdrehzahlen, beispielsweise von Grenzdrehzahlen, die durch Bauteilgrenzen vorgegeben sein können und/oder die von einer minimalen Quellendrehzahl, beispielsweise einer Leerlaufdrehzahl, abhängig sein können, kann dann eine Drehzahlentscheidung getroffen werden. Dabei kann geprüft werden, in welchen Gängen die Antriebsdrehzahl des Getriebes innerhalb der vorgegebenen Grenzdrehzahlen liegt, und eine Menge der drehzahltechnisch möglichen Gänge angegeben werden. Alternativ kann bei der Drehzahlentscheidung nur der drehzahltechnisch höchstmögliche Gang (oberer Drehzahlgrenzgang) sowie der drehzahltechnisch kleinstmögliche Gang (unterer Drehzahlgrenzgang) bestimmt werden. Dadurch wird z.B. ein effizienter Bauteilschutz ermöglicht.

Weiter alternativ oder zusätzlich kann für einige oder alle Gänge des Getriebes als Antriebsstrangparameter ein Primärenergiebedarf, insbesondere ein Gesamtkraftstoffverbrauch, berechnet werden, und in Abhängigkeit des bestimmten Primärenergiebedarfs jedes Gangs eine Effizienzentscheidung getroffen werden. Dabei kann beispielsweise abhängig von dem Primärenergiebedarf der einzelnen Gangalternativen eine Sortierung der Gänge durchgeführt werden, beispielsweise absteigend im Primärenergiebedarf, und eine Effizienz-Reihenfolge (verbrauchsabhängige Reihenfolge) der einzelnen Gänge festgelegt werden.

In manchen Ausführungsbeispielen kann beim Berechnen der Antriebsstrangparameter eine Umgebungsbedingung des Kraftfahrzeugs und/oder eine Lastpunktverschiebung berücksichtigt werden. Die Umgebungsbedingung kann eine Höhe, eine Umgebungstemperatur und/oder eine andere Umgebungsbedingung umfassen.

Beispielsweise kann ein Fahrprogramm in Abhängigkeit der Höhe gewählt werden. Zum Beispiel kann ab einer Höhe von 1500m über Normalhöhennull (m ü. NHN) ein HöhenFahrprogramm ausgewählt werden. Dieses kann eine Veränderung der Quellen-Momentencharakteristik berücksichtigen, die dadurch bedingt ist, dass in höheren Lagen weniger Quellmoment zur Verfügung steht, um das berechnete Radwunschmoment umzusetzen. Wenn das Höhenfahrprogramm aktiv ist, kann das erzielbare Radmoment geringer sein als bei einem für niedrigere Lagen ausgelegten Fahrprogramm und es können sich andere momententechnisch mögliche Gänge ergeben. Damit kann eine in der Höhe veränderte Charakteristik der Momentenquelle, insbesondere der Verbrennungskraftmaschine, der Wahl des Sollgangs zugrunde gelegt werden.

Das Fahrprogramm kann auch in Abhängigkeit der Umgebungstemperatur der Verbrennungskraftmaschine gewählt werden. Zum Beispiel kann, wenn die Umgebungstemperatur der Verbrennungskraftmaschine größer als eine vorgegebene Temperatur ist, ein Hitze-Fahrprogramm ausgewählt werden. Dem Hitze-Fahrprogramm können veränderte Quellen-Momentencharakteristiken zugrunde liegen, da auch bei hohen Temperaturen ein geringeres Quellmoment vorliegt.

Weiterhin kann die Berechnung des Antriebsstrangparameters, insbesondere die Berechnung der erzielbaren Leistung und/oder die Berechnung des Primärenergiebedarfs, von einer Lastpunktverschiebung abhängen.

In Hybridfahrzeugen kann die Berechnung des Antriebsstrangparameters von den Eigenschaften der elektrischen Antriebsmaschine abhängen. Beispielsweise kann vorzugsweise in einem Betriebsmodus, in dem die elektrische Antriebsmaschine aktiv ist, eine veränderliche Momenten-Charakteristik der elektrischen Antriebsmaschine beispielsweise durch Dynamisierung von Momentenkennlinien der elektrischen Antriebsmaschine berücksichtigt werden.

Gemäß dem Verfahren zum Wählen eines Ganges werden weiterhin aus den wenigstens zwei Gängen des Getriebes die Gänge, die eine vorgegebene Bedingung, insbesondere eine mit dem Radwunschmoment in Zusammenhang stehende Bedingung, erfüllen, ermittelt werden. Der Sollgang kann dann aus den ermittelten Gängen, die die Bedingung erfüllen, ausgewählt werden.

Zum Beispiel kann der berechnete Antriebsstrangparameter ein erzielbares Radmoment des Antriebsstrangs sein und die vorgegebene Bedingung kann darin liegen, dass das erzielbare Radmoment größer oder gleich dem Radwunschmoment ist. Die ermittelten Gänge können dann momententechnisch mögliche Gänge sein. Der berechnete Antriebsstrangparameter kann auch eine erzielbare Leistung sein und die vorgegebene Bedingung kann darin liegen, dass die erzielbare Leistung größer oder gleich einer Summe aus der gewünschten Fahrleistung und gegebenenfalls weiteren Leistungsanforderungen, beispielsweise der Lastpunktverschiebung, zum Beispiel einer minimalen Lastpunktverschiebung, und/oder anderen Leistungsanforderungen ist. Die ermittelten Gänge können dann leistungstechnisch mögliche Gänge sein. Der berechnete Antriebsstrangparameter kann auch eine Antriebsdrehzahl des Antriebsstrangs sein und die vorgegebene Bedingung kann darin liegen, dass die Antriebsdrehzahl innerhalb vorgegebener Grenzen liegt.

In manchen Ausführungsbeispielen, in denen der berechnete Antriebsstrangparameter ein erzielbares Radmoment ist, können beim Ermitteln der Gänge, die die vorgegebene Bedingung erfüllen, die Gänge, in denen das erzielbare Radmoment größer oder gleich dem Radwunschmoment ist, ausgewählt werden. Damit kann in unterschiedlichsten Fahrsituationen auf eine Veränderung des berechneten erzielbaren Radmoments für jeden Gang reagiert werden.

Alternativ kann beim Ermitteln von Gängen, die die vorgegebene Bedingung erfüllen, auf Grundlage des Radwunschmoments ein Rückschaltmoment bestimmt werden. Das Rückschaltmoment kann beispielsweise mittels eines Offsets und/oder eines prozentualen Werts, beispielsweise eines prozentualen Werts zwischen 80% und 90%, bestimmt werden. Beispielsweise kann das Rückschaltmoment 85% des Radwunschmoments betragen. Beim Ermitteln der Gänge, die die vorgegebene Bedingung erfüllen, können dann die Gänge, in denen das erzielbare Radmoment größer oder gleich dem Radwunschmoment ist, und ein aktueller Gang, wenn das erzielbare Radmoment in dem aktuellen Gang größer oder gleich dem Rückschaltmoment ist, ausgewählt werden.

Eine Rückschaltung bzw. ein Ausschluss eines hohen Gangs aus der Menge der momententechnisch möglichen Gänge kann somit erst dann ausgelöst werden, wenn das im aktuellen Gang erzielbare Radmoment kleiner ist als das Radwunschmoment abzüglich eines Rückschaltmangels, der sich aus einer Differenz zwischen dem Radwunschmoment und dem Rückschaltmoment bei der aktuellen Fahrgeschwindigkeit ergibt. Damit kann auf eine Veränderung des berechneten erzielbaren Radmoments für jeden Gang reagiert werden und gleichzeitig ein Hin- und Herschalten zwischen momententechnisch möglichen Gängen verhindert werden (Hysterese).

Der Rückschaltmangel kann für unterschiedliche Fahrprogramme variieren. Bei einem Sport-Fahrprogramm kann der Rückschaltmangel klein oder null sein, dass schnell mit einer Gangänderung auf eine Erhöhung des Radwunschmoments reagiert werden kann.

Alternativ oder zusätzlich kann beim Ermitteln der Gänge, die die vorgegebene Bedingung erfüllen, auf Grundlage des Radwunschmoments ein Hochschaltmoment bestimmt werden. Das Hochschaltmoment kann beispielsweise mittels eines Offsets und/oder eines prozentualen Werts, beispielsweise eines prozentualen Werts zwischen 110% und 150%, bestimmt werden. Beispielsweise kann das Hochschaltmoment 115% des Radwunschmoments betragen. Beim Ermitteln der Gänge, die die vorgegebene Bedingung erfüllen, können dann die Gänge, in denen das erzielbare Radmoment größer oder gleich dem Radwunschmoment ist, und der aktuelle Gang, wenn das erzielbare Radmoment in dem aktuellen Gang größer oder gleich dem Hochschaltmoment ist, ausgewählt werden.

Eine Hochschaltung bzw. eine Aufnahme eines hohen Gangs in die Menge der momententechnisch möglichen Gänge kann somit erst dann ausgelöst werden, wenn das erzielbare Radmoment größer wird als das Radwunschmoment zuzüglich einer Hochschaltreserve, die sich aus einer Differenz zwischen dem Radwunschmoment und dem Hochschaltmoment bei der aktuellen Fahrgeschwindigkeit ergibt. Damit ist man auf eine schnelle Erhöhung des Radwunschmoments bei gegebener Fahrgeschwindigkeit vorbereitet und gleichzeitig kann ein Hin- und Herschalten zwischen momententechnisch möglichen Gängen verhindert werden.

Die Hochschaltreserve kann für unterschiedliche Fahrprogramme variieren. Bei einem kraftstoffsparenden Fahrprogramm kann die Hochschaltreserve klein sein, so dass sich schnell ein verbrauchsarmer Zustand einstellen kann. Bei einem Sport-Fahrprogramm hingegen kann die Hochschaltreserve größer sein, dass eine schnelle Beschleunigung möglich ist.

In einem Sport-Fahrprogramm können der Rückschaltmangel und/oder die Hochschaltreserve beispielsweise von einem geeignet und fortlaufend bestimmten Sportlichkeitsfaktor abhängen. Der Sportlichkeitsfaktor kann vom Fahrer selbst bestimmt werden, beispielsweise durch Auswahl des Sportlichkeitsfaktors über eine Nutzerschnittstelle, oder iterativ an das Fahrverhalten des Fahrers und/oder an Umgebungsbedingungen, beispielsweise eine Steigung des aktuell befahrenen Streckenabschnitts und/oder anderen Straßenbedingungen, beispielsweise wetterbedingten Straßenbedingungen, angepasst sein.

Der Antriebsstrangparameter kann auch die erzielbare Leistung des Antriebsstrangs sein. Die mit Bezug auf das erzielbare Radmoment beschriebenen Merkmale können analog auf die erzielbare Leistung übertragen werden. Vorzugsweise wird insbesondere bei Hybridfahrzeugen die Berechnung der erzielbaren Leistung in Abhängigkeit der Lastpunktverschiebung durchgeführt.

Der Antriebsstrangparameter kann auch die Antriebsdrehzahl des Antriebsstrangs sein. Bei der Drehzahlentscheidung kann mit prädizierten Drehzahlen unter Berücksichtigung der Schaltzeiten gerechnet werden, d.h. eine Vorbereitungszeit einer Schaltung kann bei der Drehzahlentscheidung berücksichtigt werden. Auf diese Weise kann verhindert werden, dass die Drehzahlgrenzen verletzt werden, weil eine endliche Zeit vergeht zwischen der Schaltentscheidung und der Reaktion der Drehzahl.

Bei der Drehzahlentscheidung in einem Hybridfahrzeug können die Drehzahlgrenzen von einem Betriebsmodus des Hybridfahrzeugs abhängen. Zum Beispiel kann eine Schutzdrehzahl einer Trennkupplung zwischen der elektrischen Antriebsmaschine und der Verbrennungskraftmaschine in einem Modus "verbrennungsmotorisches Fahren" unberücksichtigt bleiben, während die K0-Schutzdrehzahl in einem Modus "elektrisches Fahren", in dem die Batterie entladen wird, berücksichtigt werden muss. Dadurch kann verhindert werden, dass sich die Drehzahlen von elektrischer Antriebsmaschine und Verbrennungskraftmaschine stark unterscheiden und es beim Einkoppeln der Verbrennungskraftmaschine zu einer Erhitzung der Trennkupplung kommt.

In manchen Ausführungsbeispielen kann gemäß dem Verfahren zum Wählen eines Ganges weiterhin eine Reihenfolge der wenigstens zwei Gänge in Abhängigkeit der berechneten Antriebsstrangparameter bestimmt werden. Der Sollgang kann dann auf Grundlage der bestimmten Reihenfolge aus den mindestens zwei Gängen ausgewählt werden.

In manchen Ausführungsbeispielen kann der berechnete Antriebsstrangparameter ein Primärenergiebedarf des Antriebsstrangs, vorzugsweise der Gesamtkraftstoffverbrauch des Antriebsstrangs, sein. Die Gänge können dann abhängig von dem Primärenergiebedarf des Antriebsstranges sortiert werden, um die Reihenfolge zu bestimmen. Beispielsweise kann die Reihenfolge mit einem Gang mit dem niedrigsten Primärenergiebedarf beginnen und mit einem Gang mit dem höchsten Primärenergiebedarf enden. Als Sollgang kann dann auf Grundlage der bestimmten Reihenfolge der wenigstens zwei Gänge derjenige Gang, der den geringsten Primärenergiebedarf aufweist, ausgewählt werden. In der beschriebenen Reihenfolge kann das der Gang an erster Stelle der Reihenfolge sein.

In manchen Ausführungsbeispielen kann der Gang, der den geringsten Primärenergiebedarf aufweist, als Sollgang ausgewählt werden, wenn ein aktueller Gang länger als eine vorgegebene Verweildauer nicht der Gang mit dem geringsten Primärenergiebedarf ist. Die vorgegebene Verweildauer kann eine konstante Zeitspanne sein, die beispielsweise je nach Fahrprogramm unterschiedlich festgelegt ist.

In manchen Ausführungsbeispielen kann die vorgegebene Verweildauer von einem Verbrauchsvorteil, beispielsweise von einem Unterschied des geringsten Primärenergiebedarfs zu einem Primärenergiebedarf für den aktuellen Gang abhängig sein.

Somit kann ausgehend vom aktuellen Gang ein effizienterer Gang bzw. ein Gang mit geringerem Primärenergiebedarf, insbesondere der Gang mit dem geringsten Primärenergiebedarf, nur ausgewählt werden, wenn eine vorgegebene Verweildauer, insbesondere eine vom Verbrauchsvorteil in dem effizienteren Gang abhängige Verweildauer, verstrichen ist. Dadurch kann eine Entprellung erreicht werden. Als besondere Ausprägung kann dieser Zusammenhang zwischen der Verweildauer im aktuellen Gang und dem Verbrauchsvorteil im verbrauchsoptimalen Gang für Hoch- und Rückschaltungen separat wählbar gestaltet werden.

Alternativ oder zusätzlich kann der Gang, der einen geringeren Primärenergiebedarf aufweist, als Sollgang ausgewählt werden, wenn durch Prädiktion bestimmt wird, dass der Gang mit dem geringeren Primärenergiebedarf für eine vorgegebene Zeitspanne der Gang mit dem geringsten Energiebedarf bleiben wird. Die vorgegebene Zeitspanne kann wieder eine konstante Zeitspanne sein, die beispielsweise je nach Fahrprogramm unterschiedlich festgelegt ist, oder von einem Unterschied des geringsten Primärenergiebedarfs zu einem Primärenergiebedarf für einen aktuellen Gang abhängig sein.

Somit kann ein effizienterer Gang insbesondere dann ausgewählt werden, wenn mittels eines Prädiktionsverfahrens gewährleistet werden kann, dass dieser Gang eine bestimmte, insbesondere vom Verbrauchsvorteil abhängige Zeit gefahren werden kann. Dadurch kann wiederum eine Entprellung erreicht werden.

In manchen Ausführungsbeispielen kann der Primärenergiebedarf auf Grundlage eines Bedarfs an elektrischer Energie und eines Bedarfs an chemischer Energie bestimmt werden, wobei der Bedarf an elektrischer Energie mittels eines Umrechnungsfaktors in einen Bedarf an chemischer Energie umgerechnet werden kann. Die chemische Energie kann z.B. als Kraftstoffmenge pro 100 km angegeben sein und die elektrische Energie kann eine elektrische Leistung sein. Der Umrechnungsfaktor von der elektrischen Leistung in die Kraftstoffmenge pro 100 km kann eine Konstante sein. Alternativ kann der Umrechnungsfaktor abhängig von einem aktuellen Zustand des Kraftfahrzeugs variieren. Zum Beispiel kann der Umrechnungsfaktor abhängig von einer Ladungsbetriebsart und/oder einem Ladungszustand des Fahrzeugs variieren, beispielsweise kann der Umrechnungsfaktor in einem ladungserhaltenden Betrieb größer sein als beispielsweise in einem Modus, in dem die Batterie entladen wird, oder in einem Modus, der sportliches Fahren unterstützt, größer sein als in einem Modus, der ökologisches Fahren unterstützt. Alternativ oder zusätzlich kann der Umrechnungsfaktor abhängig von prädiktiven Streckendaten sein. Alternativ oder zusätzlich kann der Umrechnungsfaktor abhängig von einem geeignet bestimmten aktuellen Preis der Energie variieren ist. Der geeignet bestimmte aktuelle Preis der Energie kann beispielsweise von prädiktiven Streckendaten abhängen. So kann, wenn eine Passabfahrt bevorsteht, elektrische Energie billiger als chemische Energie sein und der Umrechnungsfaktor sinken.

Bei der Berechnung des Primärenergiebedarfs können wesentliche Bestandteile des Antriebsstrangs, insbesondere alle wesentlichen Bestandteile des Antriebsstrangs, betrachtet werden und deren Verbrauchseinfluss berücksichtigt werden. Der Verbraucheinfluss kann vorzugsweise als Primärenergiebedarf formuliert werden.

Vorzugsweise kann bei der Berechnung des Primärenergiebedarfs ein Wirkungsgrad des Getriebes berücksichtigt werden. Beispielsweise kann ein Wirkungsgrad der Verbrennungskraftmaschine und ein Wirkungsgrad des Getriebes bestimmt werden und daraus der Primärenergiebedarf berechnet werden. Insbesondere bei Hybridfahrzeugen kann weiterhin ein Wirkungsgrad der elektrischen Antriebsmaschine bestimmt werden und auf Grundlage dieses der Primärenergiebedarf berechnet werden. Bei Hybridfahrzeugen kann außerdem der Wirkungsgrad des elektrischen Energiespeichers bestimmt und zur Verbrauchsberechnung herangezogen werden. Außerdem oder alternativ kann bei der Bestimmung des Primärenergiebedarfs ein Energieverbrauch, der für einen Schaltvorgang zur Verfügung gestellt werden muss, berücksichtigt werden. Damit kann eine Schaltleistung Bestandteil der Berechnung des Primärenergiebedarfs sein. Außerdem oder alternativ kann ein Wirkungsgrad eines Anfahrelements, beispielsweise einer Kupplung, eines Wandlers und/oder eines anderes Anfahrelements, bei der Bestimmung des Primärenergiebedarfs berücksichtigt werden. Durch die Berücksichtigung des Wirkungsgrads des Anfahrelements können Hochschaltungen, die zu einer schlupfenden oder stärker schlupfenden Anfahrkupplung führen würden, effektiv vermieden werden.

Bei Hybridfahrzeugen lässt sich weiterhin eine Lastpunktverschiebung bei der Berechnung des Primärenergiebedarfs berücksichtigen. Damit lässt sich beispielsweise eine Lastpunktverschiebung zwischen Verbrennungskraftmaschine und einer parallel angeordneten elektrischen Antriebsmaschine, oder von einem Teil-Antriebsstrang auf einen anderen ermöglichen, beispielsweise von einer Vorderachse, die mit einer Verbrennungskraftmaschine verbunden ist, auf eine Hinterachse, die mit einer elektrischen Antriebsmaschine verbunden ist, oder umgekehrt.

Im Fall eines Momentenmangels, d.h. dass das Radwunschmoment in keinem Gang erreicht werden kann, kann bei der Wahl des Sollgangs ein stellbares Radmoment zugrunde gelegt werden. Dann kann der Primärenergiebedarf auf Grundlage des stellbaren Radmoments berechnet werden.

Gemäß dem erfindungsgemäßen Verfahren zum Wählen eines Ganges wird weiterhin auf Grundlage des Radwunschmoments für einen Teil ein weiterer Antriebsstrangparameter (nachfolgend auch als zweiter Antriebsstrangparameter bezeichnet) berechnet werden. Der Sollgang kann dann zusätzlich auf Grundlage der berechneten weiteren Antriebsstrangparameter ausgewählt werden.

Beispielsweise kann für wenigstens zwei Gänge, vorzugsweise alle Gänge des Getriebes, ein erzielbares Radmoment als erster Antriebsstrangparameter berechnet werden und eine Menge an Gängen aus den wenigstens zwei Gängen bestimmt werden, die momententechnisch möglich sind, wie oben erläutert. Auf Grundlage des Radwunschmoments kann für dieselben wenigstens zwei Gänge, vorzugsweise alle Gänge des Getriebes, ein Primärenergiebedarf als zweiter Antriebsparameter berechnet werden und die Gänge auf Grundlage der berechneten Werte für den Primärenergiebedarf in eine Reihenfolge sortiert werden, wie oben erläutert. Auf Grundlage des Radwunschmoments kann für dieselben wenigstens zwei Gänge, vorzugsweise alle Gänge des Getriebes, eine Antriebsdrehzahl als dritter Antriebsparameter berechnet werden und eine Menge an Gängen aus den wenigstens zwei Gängen ermittelt werden, die drehzahltechnisch möglich sind, wie oben erläutert. Auf Grundlage des Radwunschmoments kann für dieselben wenigstens zwei Gänge, vorzugsweise alle Gänge des Getriebes, eine erzielbare Leistung als vierter Antriebsparameter berechnet werden und eine Menge an Gängen aus den wenigstens zwei Gängen ermittelt werden, die leistungstechnisch möglich sind, wie oben erläutert.

Auf Grundlage der Menge an momententechnisch möglichen Gängen und der primärenergieverbrauchsabhängigen Reihenfolge der Gänge kann dann ein Sollgang ausgewählt werden. Vorzugsweise kann bei der Auswahl des Sollgangs außerdem die Menge an drehzahltechnisch möglichen Gängen und/oder die Menge an leistungstechnisch möglichen Gängen berücksichtigt werden. Alternativ kann ein Sollgang auch auf Grundlage der primärenergieverbrauchsabhängigen Reihenfolge der Gänge und der Menge an drehzahltechnisch möglichen Gängen und/oder der Menge an leistungstechnisch möglichen Gängen ausgewählt werden. Weiter alternativ kann ein Sollgang auch auf Grundlage der Menge an drehzahltechnisch möglichen Gängen und der Menge an leistungstechnisch möglichen Gängen ausgewählt werden. Vorzugsweise wird der Sollgang auf Grundlage der Menge an momententechnisch möglichen Gängen, der primärenergieverbrauchsabhängigen Reihenfolge der Gänge, der Menge an drehzahltechnisch möglichen Gängen und der Menge an leistungstechnisch möglichen Gängen ausgewählt.

Bei einem Öko-Fahrprogramm kann der Rückschaltmangel angehoben werden, wenn auf Grundalge des erzielbaren Radmoments ein Gang als Sollgang ausgewählt wird, dessen Primärenergieverbrauch um einen vorgegebenen Wert größer ist als ein Primärenergieverbrauch im aktuellen Gang, d.h. eine Effizienz erheblich schlechter ist als im aktuellen Gang. Die Anhebung des Rückschaltmangels kann in Abhängigkeit der Effizienzverschlechterung geeignet applizierbar sein.

In manchen Ausführungsbeispielen können gemäß dem Verfahren zum Wählen eines Ganges weiterhin aus den wenigstens zwei Gängen des Antriebsstrangs die Gänge, die eine vorgegebene Bedingung erfüllen, ermittelt werden, wie beispielsweise oben beschrieben. Anschließend kann in Abhängigkeit der berechneten weiteren Antriebsstrangparameter eine Reihenfolge der Gänge, die eine vorgegebene Bedingung erfüllen, bestimmt werden. Der Sollgang kann dann auf Grundlage der bestimmten Reihenfolge der Gänge ausgewählt werden.

Beispielsweise kann zunächst für eine erste Gruppe von Gängen des Getriebes ein erzielbares Radmoment als erster Antriebsstrangparameter berechnet werden und daraus eine Menge von Gängen, die momententechnisch möglich sind, ermittelt werden, wie oben erläutert. Für die ermittelten momententechnisch möglichen Gängen kann dann ein Primärenergiebedarf als zweiter Antriebsstrangparameter bestimmt werden, auf Grundlage dessen die ermittelten momententechnisch möglichen Gänge dann in einer verbrauchsabhängigen Reihenfolge sortiert werden können. Diese verbrauchsabhängige Reihenfolge kann dann der Auswahl des Sollgangs zugrunde gelegt werden.

Weiterhin kann auf Grundlage des Radwunschmoments für eine zweite Gruppe von Gängen des Getriebes eine Antriebsdrehzahl des Getriebes als dritter Antriebsstrangparameter berechnet werden und eine Menge von Gängen bestimmt werden, die drehzahltechnisch möglich sind, wie oben erläutert.

Die zweite Gruppe von Gängen kann wenigstens zwei Gänge, vorzugsweise alle Gänge, des Getriebes, umfassen und die drehzahltechnisch möglichen Gänge können als erste Gruppe der Bestimmung der momententechnisch möglichen Gänge zugrunde liegen. Alternativ, kann die zweite Gruppe von Gängen genau die momententechnisch möglichen Gänge umfassen.

Beispielsweise können aus allen Gängen des Getriebes die drehzahltechnisch möglichen Gänge bestimmt werden. Diese drehzahltechnisch möglichen Gänge können dann der Bestimmung der momententechnisch möglichen Gänge zugrunde gelegt werden. Die drehzahl-und momententechnisch möglichen Gänge können dann der Bestimmung der verbrauchsabhängigen Reihenfolge der Gänge zugrunde liegen. Alternativ können zunächst zum Beispiel aus allen Gängen des Getriebes die momententechnisch möglichen Gänge bestimmt werden. Diese momententechnisch möglichen Gänge können dann der Bestimmung der drehzahltechnisch möglichen Gänge zugrunde gelegt werden. Die drehzahl- und momententechnisch möglichen Gänge können dann der Bestimmung der verbrauchsabhängigen Reihenfolge der Gänge zugrunde liegen.

Weiterhin kann auf Grundlage des Radwunschmoments für eine dritte Gruppe von Gängen des Getriebes eine erzielbare Leistung als vierter Antriebsstrangparameter berechnet werden und eine Menge an Gängen bestimmt werden, die leistungstechnisch möglich sind, wie oben erläutert.

Die dritte Gruppe von Gängen kann wenigstens zwei Gänge, vorzugsweise alle Gänge, des Getriebes umfassen. Die leistungstechnisch möglichen Gänge können als erste Gruppe der Bestimmung der momententechnisch möglichen Gänge oder als zweite Gruppe der Bestimmung der drehzahltechnisch möglichen Gänge zugrunde liegen. Alternativ kann die dritte Gruppe von Gängen genau die momenten- und/oder drehzahltechnisch möglichen Gänge umfassen.

Zum Beispiel können aus allen Gängen des Getriebes die drehzahltechnisch möglichen Gänge bestimmt werden. Diese drehzahltechnisch möglichen Gänge können dann der Bestimmung der leistungstechnisch möglichen Gänge zugrunde gelegt werden. Diese leistungstechnisch möglichen Gänge können dann der Bestimmung der momententechnisch möglichen Gänge zugrunde gelegt werden. Die leistungs-, drehzahl- und momententechnisch möglichen Gänge können dann der Bestimmung der verbrauchsabhängigen Reihenfolge der Gänge zugrunde liegen.

Dadurch, dass nur Gänge, die in Abhängigkeit eines Antriebsstrangparameters als möglich erkannt werden, bei einer weiteren Sollgangbestimmung berücksichtigt werden, kann sich eine Rechenzeitersparnis ergeben, da in den einzelnen Schritten nicht alle Gangalternativen durchgerechnet werden müssen.

Vorzugsweise kann der aktuelle Gang bei der Auswahl des Sollgangs berücksichtigt werden. Insbesondere kann vorgesehen sein, dass lediglich Gänge als Sollgang ausgewählt werden, die benachbart zu einem aktuellen Gang sind. Dadurch kann eine Mehrfach-Rückschaltung bzw. Mehrfach-Hochschaltung verhindert werden.

Allerdings kann in manchen Situationen auch eine Mehrfach-Rückschaltung bzw. eine Mehrfach-Hochschaltung unter vorgegebenen Bedingungen zugelassen werden. Beispielsweise kann eine Mehrfach-Rückschaltung in Gänge, die mindestens einen vordefinierten Verbrauchsvorteil bieten, zugelassen werden (Rückschaltberuhigung). Dieser Verbrauchsvorteil kann wiederum abhängig gestaltet werden. Außerdem kann eine Mehrfach-Rückschaltung in einen nächstliegenden Gang zugelassen werden, der um ein vorgegebenes Maß verbrauchsungünstiger ist als der verbrauchsgünstigste Gang (Rückschaltberuhigung). Dieser akzeptierte Verbrauchsnachteil kann wiederum abhängig gestaltet werden. In beiden Fällen kann bei der Auswahl des Sollgangs wieder die Verweildauer im nicht-optimalen aktuellen Gang abhängig vom Verbrauchsvorteil im möglichen Rückschaltgang gestaltet werden.

Die vorliegende Erfindung betrifft weiterhin eine Steuervorrichtung zum Wählen eines Ganges eines Getriebes in einem Antriebsstrang eines Kraftfahrzeugs, wobei die Steuervorrichtung dazu ausgebildet ist, ein Radwunschmoment zu erhalten, für wenigstens zwei Gänge des Getriebes einen Antriebsstrangparameter zu berechnen und auf Grundlage der berechneten Antriebsstrangparameter unter Berücksichtigung des Radwunschmoments einen Sollgang auszuwählen. Die Steuervorrichtung kann insbesondere dazu ausgelegt sein, ein Verfahren zum Wählen eines Ganges eines Getriebes in einem Antriebsstrang eines Kraftfahrzeugs, wie es voranstehend beschrieben wurde, auszuführen.

Die Steuervorrichtung kann einen Prozessor, beispielsweise einen Mikroprozessor, aufweisen, der dazu ausgebildet ist, das beschriebene Verfahren zum Wählen eines Ganges eines Getriebes auszuführen. Die Steuervorrichtung kann weiterhin einen Datenspeicher aufweisen, in dem vorzugsweise ein Programm hinterlegt ist, das Anweisungen für den Prozessor enthält, um diesen entsprechend dem beschriebenen Verfahren zu steuern. In dem Datenspeicher können zudem vorgegebene Parameter zum Durchführen des beschriebenen Verfahrens hinterlegt sein, beispielsweise die vorgegebenen Verweil-Zeitspannen, Momentenquellencharakteristiken und/oder andere Parameter.

Die Steuervorrichtung kann eine Reihe von Signaleingängen und Signalausgängen aufweisen. Über die Signaleingänge können beispielsweise das Radwunschmoment, eine Fahrpedalstellung, eine Fahrgeschwindigkeit, Umgebungsbedingungen, Zustandsparameter des Kraftfahrzeugs und/oder andere Signale empfangen werden. Über die Signalausgänge kann insbesondere der Sollgangs ausgegeben werden. Der ausgewählte Gang kann in einem Automatikfahrzeug angewiesen werden oder in einem Kraftfahrzeug mit Handschaltgetriebe als Schaltempfehlung ausgegeben werden, beispielsweise über eine Anzeigevorrichtung.

Die Steuervorrichtung kann in eine Motorsteuerung oder eine Getriebesteuerung des Kraftfahrzeugs integriert sein. Alternativ kann die Steuervorrichtung als eine separate Einheit ausgebildet sein.

Die vorliegende Erfindung betrifft weiterhin ein Kraftfahrzeug mit einem Antriebsstrang, der ein Getriebe aufweist, und einer Steuervorrichtung zum Ausführen eines Verfahrens zum Wählen eines Sollgangs des Getriebes, wie sie voranstehend beschrieben wurde. Das Kraftfahrzeug kann ein reines Verbrennungskraftfahrzeug mit einer Verbrennungskraftmaschine oder Hybridfahrzeug mit einer elektrischen Antriebsmaschine und einer Verbrennungskraftmaschine sein. Die Verbrennungskraftmaschine kann ein Ottomotor oder ein Dieselmotor sein.

Ausführungsbeispiele der Erfindung werden nun beispielhaft und unter Bezugnahme auf die beigefügten Zeichnungen beschrieben. Es zeigen:
- Fig. 1: eine Darstellung eines herkömmlichen Schaltkennfelds mit Hoch- und Rückschaltkennlinien;
- Fig. 2: eine schematische Darstellung eines Antriebsstrangs eines Hybridfahrzeugs;
- Fig. 3: ein Flussdiagram eines Verfahrens zum Wählen eines Sollgangs auf Grundlage einer Momentenentscheidung;
- Fig. 4: ein Verlauf eines Radwunschmoments in Abhängigkeit einer Fahrgeschwindigkeit;
- Fig. 5: ein Flussdiagram eines Verfahrens zum Wahlen eines Sollgangs auf Grundlage einer Effizienzentscheidung;
- Fig. 6: ein Verlauf einer Verweildauer im aktuellen Gang in Abhängigkeit eines Verbrauchsvorteils; und
- Fig. 7: ein Flussdiagram eines Verfahrens zum Wahlen eines Sollgangs auf Grundlage verschiedener Entscheidungen.

Ein Ausführungsbeispiel eines Antriebsstrangs 1 eines Hybridfahrzeugs ist in Fig. 2 gezeigt. Der Antriebsstrang 1 des Hybridfahrzeugs enthält eine Verbrennungskraftmaschine 10 mit einer Kurbelwelle 11, einen Elektroantrieb 12 und eine Trennkupplung 13, über die der Elektroantrieb 12 mit der Kurbelwelle 11 der Verbrennungskraftmaschine 10 gekoppelt ist. Die Verbrennungskraftmaschine 10 und der Elektroantrieb 12 sind über ein Getriebe 14 mit einer Antriebsachse 15, die mit Rädern 16 des Hybridfahrzeugs verbunden ist, gekoppelt. Das Getriebe 14, das zum Beispiel ein Doppelkupplungsgetriebe ist, ist mit einer Getriebesteuerung 2 über eine Signalleitung 20 verbunden.

Die Getriebesteuerung 2 weist einen Signaleingang 21 auf, um von einer Motorsteuerung (nicht dargestellt) ein Radwunschmoment zu empfangen, das von einem Fahrpedalwert, der eine Fahrpedalstellung des Fahrpedals repräsentiert, und einer Fahrgeschwindigkeit des Hybridfahrzeugs abhängig ist.

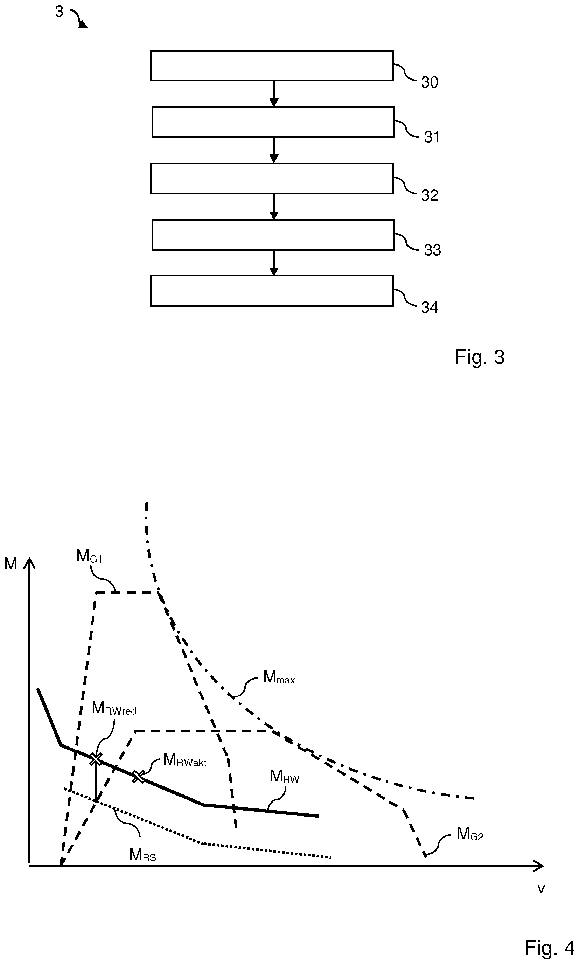

Die Getriebesteuerung 2 ist dazu ausgebildet, eines der mit Bezug auf Fig. 3, Fig. 5 und Fig. 7 weiter unten beschriebenen Verfahren 3, 4, 5 zum Wählen eines Ganges eines Getriebes in einem Antriebsstrang eines Kraftfahrzeugs auszuführen und das Getriebe 14 auf Grundlage eines ausgewählten Sollgangs anzusteuern.

Fig. 3 zeigt ein Flussdiagramm eines ersten Ausführungsbeispiels eines erfindungsgemäßen Verfahrens 3 zum Wählen eines Ganges eines Getriebes auf Grundlage erzielbarer Radmomente in den unterschiedlichen Gängen.

Bei 30 wird von einer Motorsteuerung ein Radwunschmoment M_{RW} empfangen. Das Radwunschmoment ist auf Grundlage einer Fahrpedalstellung und einer Fahrgeschwindigkeit sowie eines in dem Datenspeicher hinterlegten, von Fahrzeug- und Umgebungsbedingungen abhängigen Zusammenhangs zwischen dem Radwunschmoment M_{RW} einerseits und der Fahrpedalstellung und der Fahrgeschwindigkeit andererseits berechnet. Ein Beispiel für einen Zusammenhang zwischen dem Radwunschmoment M_{RW} einerseits und der Fahrgeschwindigkeit andererseits bei konstanter Fahrpedalstellung ist in Fig. 4 dargestellt. Fig. 4 zeigt, dass das Radwunschmoment M_{RW} mit zunehmender Fahrgeschwindigkeit zunächst stark, dann schwächer abnimmt.

Bei 31 wird für jeden Gang des Getriebes ein bei der aktuellen Fahrgeschwindigkeit erzielbares Radmoment M_{G1}, M_{G2} berechnet. In Fig. 4 sind erzielbare Radmomente M_{G1}, M_{G2} für zwei verschiedene Gänge exemplarisch gezeigt. Die erzielbaren Radmomente M_{G1}, M_{G2} steigen bei geringen Fahrgeschwindigkeiten mit einer Steigung, die für jeden Gang unterschiedlich ist, an. Ab einer Fahrgeschwindigkeit, die für jeden Gang unterschiedlich ist, weisen die erzielbaren Radmomente M_{G1}, M_{G2} ein Plateau, d.h. einen konstanten Wert, auf. Sobald die erzielbaren Radmomente M_{G1}, M_{G2} eine Zugkrafthyperbel Mₘₐₓ der Momentenquellen, hier der Verbrennungskraftmaschine und des Elektroantriebs des Antriebsstrangs, erreichen, sinken die erzielbaren Radmomente M_{G1}, M_{G2} mit einer weiteren Steigung, die für jeden Gang unterschiedlich ist. Die Zugkrafthyperbel Mₘₐₓ der Momentenquelle ist ebenfalls in Fig. 4 dargestellt und sinkt mit steigender Fahrgeschwindigkeit zunächst stark, dann schwächer. In den in Fig. 4 gezeigten Geschwindigkeitsbereichen liegt das Radwunschmoment M_{RW} bei allen Fahrgeschwindigkeiten unterhalb der Zugkrafthyperbel Mₘₐₓ der Momentenquellen, so dass es zu keinem Momentenmangel kommt.

Bei 32 wird eine Menge an momententechnisch möglichen Gängen, in denen das aktuelle Radwunschmoment gestellt werden kann, ermittelt. Dazu wird das Radwunschmoment M_{RW} mit den erzielbaren Radmomenten M_{G1}, M_{G2} der unterschiedlichen Gänge verglichen. Wenn das Radwunschmoment M_{RW} kleiner als das erzielbare Radmoment M_{G1}, M_{G2} oder gleich dem erzielbaren Radmoment M_{G1}, M_{G2} eines Gangs ist, wird dieser Gang der Menge an momententechnisch möglichen Gängen zugeordnet. Wenn das Radwunschmoment M_{RW} größer als das erzielbare Radmoment M_{G1}, M_{G2} eines Gangs ist, wird dieser Gang nicht der Menge an momententechnisch möglichen Gängen zugeordnet. Falls das Radwunschmoment M_{RW} aktuell bei dem Kreuz M_{RWakt} in Fig. 4 liegt, kann das Radwunschmoment M_{RWakt} in beiden dargestellten Gängen gestellt werden.

Bei 33 wird aus der Menge an momententechnisch möglichen Gängen ein Sollgang ausgewählt. Wenn das Radwunschmoment M_{RW} in dem aktuellen Gang einstellbar ist, wird der aktuelle Gang als Sollgang ausgewählt. Beispielsweise, wenn das Radwunschmoment M_{RWakt} gestellt werden soll und sich das Fahrzeug in dem zweiten Gang, in dem das Radmoment M_{G2} erzielt werden kann, befindet, wird der zweite Gang beibehalten. Wenn das Radwunschmoment M_{RWred} in Fig. 4 gestellt werden soll und sich das Fahrzeug in dem zweiten Gang, in dem das Radmoment M_{G2} erzielt werden kann, ist das erzielbare Radmoment kleiner als das Radwunschmoment. In diesem Fall wird auf Grundlage des Radwunschmoments M_{RW} ein Rückschaltmoment M_{RS} berechnet, indem das Radwunschmoment M_{RW} mit einem Wert von 0.85 multipliziert wird. Das Rückschaltmoment M_{RS} ist für eine vorgegebene Fahrpedalstellung in Fig. 4 gezeigt und sinkt mit steigender Fahrgeschwindigkeit proportional zu dem Radwunschmoment M_{RW}. Wenn das Rückschaltmoment M_{RW} in dem aktuellen Gang einstellbar ist, wird wiederum der aktuelle Gang als Sollgang ausgewählt. Dies ist der Fall, wenn das Radwunschmoment beispielsweise den Wert M_{RWred} in Fig. 4 annimmt. Wenn das Rückschaltmoment M_{RW} in dem aktuellen Gang nicht mehr einstellbar ist, wird ein Gang, der kleiner als der aktuelle Gang ist, als Sollwert ausgewählt.

Bei 34 wird der Sollgang angewiesen. Dazu wird ein Signal an das Getriebe übermittelt, das das Getriebe zum Umschalten des Ganges in den Sollgang veranlasst.

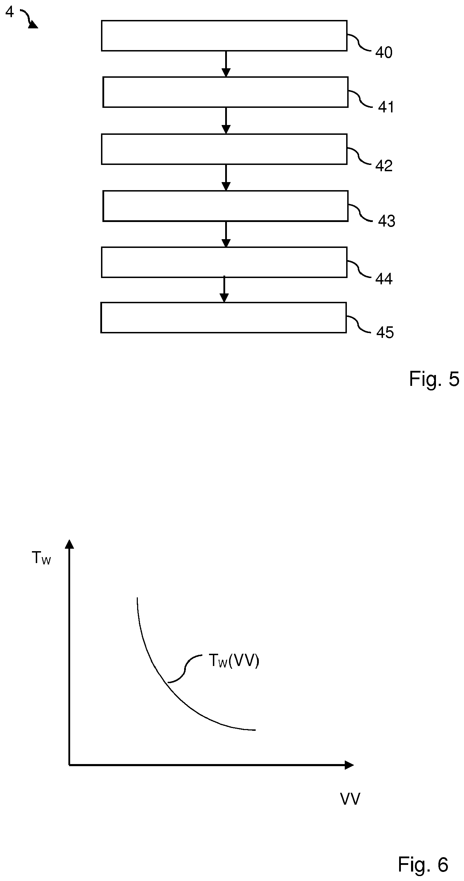

Fig. 5 zeigt ein Flussdiagramm eines zweiten Ausführungsbeispiels eines erfindungsgemäßen Verfahrens 4 zum Wählen eines Ganges eines Getriebes auf Grundlage eines Primärverbrauchs.

Bei 40 wird ein Radwunschmoment M_{RW} empfangen. Dies erfolgt wie mit Bezug auf 30 in Fig. 3 beschrieben.

Bei 41 wird für jeden Gang ein Primärverbrauch bestimmt, der zum Stellen des Radwunschmoments nötig ist. Zum Bestimmen des Primärenergieverbrauchs wird eine Berechnungsvorschrift, die die Physik des Triebstrangs des Kraftfahrzeugs abbildet, herangezogen.

Auf Grundlage des Radwunschmoments wird mittels eines Kennfeldes, das einen Wirkungsgrad des Getriebes und damit die Verluste durch das Getriebe in dem vorgegebenen Gang berücksichtigt, ein Getriebeeingangsmoment bestimmt. Das Getriebeeingangsmoment wird dann auf die verschiedenen Momentenquellen mit Hilfe einer Lastpunktverschiebung verteilt. Anschließend wird ein Kraftstoffverbrauch der Verbrennungskraftmaschine zum Stellen des Anteils des Getriebeeingangsmoments, das der Verbrennungskraftmaschine zugeordnet wurde, bestimmt. Außerdem wird ein Verbrauch an elektrischer Energie des Elektroantriebs zum Stellen des Anteils des Getriebeeingangsmoments, das dem Elektroantrieb zugeordnet wurde, bestimmt. Zuletzt wird der Verbrauch an elektrischer Energie mittels eines konstanten Umrechnungsfaktors in einen Kraftstoffverbrauch umgerechnet und mit dem bestimmten Kraftstoffverbrauch summiert, um einen Gesamtkraftstoffverbrauch als Primärenergieverbrauch zu erhalten.

Bei 42 wird der Gang mit dem geringsten Gesamtkraftstoffverbrauch ermittelt.

Bei 43 wird geprüft, ob der aktuelle Gang dem Gang mit dem geringsten Gesamtkraftstoffverbrauch entspricht. Ist das nicht der Fall, wird ein Timer gestartet und fortlaufend geprüft, ob die mit dem Timer bestimmte Verweildauer im aktuellen (nicht-optimalen) Gang kleiner ist als eine geeignet bestimmte fortlaufend berechnete maximale Verweildauer Tw. Die Verweildauer Tw ist von einem Verbrauchsvorteil VV gegenüber einem Gesamtkraftstoffverbrauch in dem aktuellen Gang abhängig, wie in Fig. 6 dargestellt ist. Fig. 6 zeigt, dass die Verweildauer Tw mit steigendem Verbrauchsvorteil VV sinkt, so dass ein verbrauchseffizienterer Gang bei einem hohen Verbrauchsvorteil schneller als Sollgang ausgewählt wird als bei einem niedrigeren Verbrauchsvorteil.

Bei 44 wird ein Sollgang ausgewählt. Wenn der Gang mit dem geringsten Gesamtkraftstoffverbrauch kürzer als die vorgegebene Verweildauer Tw der Gang mit dem geringsten Gesamtkraftstoffverbrauch ist, wird der aktuelle Gang als Sollgang ausgewählt. Wenn dagegen der Gang mit dem geringsten Gesamtkraftstoffverbrauch auch nach der vorgegebenen Verweildauer Tw der Gang mit dem geringsten Gesamtkraftstoffverbrauch ist, wird der Gang mit dem geringsten Gesamtkraftstoffverbrauch als Sollgang ausgewählt.

Bei 45 wird der ausgewählte Sollgang angewiesen. Dies erfolgt wie mit Bezug auf 34 in Fig. 3 beschrieben.

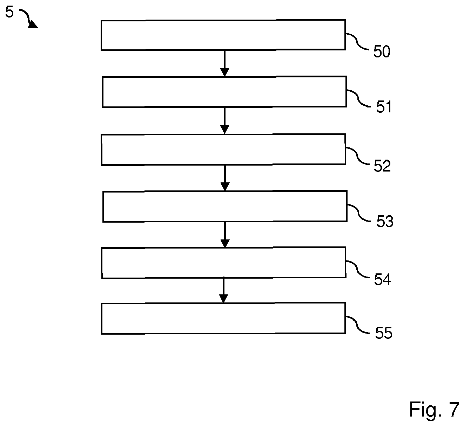

Fig. 7 zeigt ein Flussdiagramm eines dritten Ausführungsbeispiels eines erfindungsgemäßen Verfahrens 5 zum Wählen eines Ganges eines Getriebes auf Grundlage unterschiedlicher Antriebsstrangparameter.

Bei 50 wird ein Radwunschmoment M_{RW} empfangen. Dies erfolgt wie mit Bezug auf 30 in Fig. 3 beschrieben.

Bei 51 wird eine Menge an drehzahltechnisch möglichen Gängen ermittelt. Dazu wird für alle Gänge des Getriebes eine Antriebsdrehzahl des Getriebes bestimmt, bei der bei gegebener Fahrgeschwindigkeit das Radwunschmoment erreicht werden kann. Anschließend wird für jeden Gang geprüft, ob die jeweils bestimmte Antriebsdrehzahl in einem Drehzahlbereich zwischen einer Leerlaufdrehzahl als unterer Grenze und einer maximalen Drehzahl als oberer Grenze liegt. Liegt die Antriebsdrehzahl in einem Gang innerhalb des Drehzahlbereichs, wird der Gang der Menge an drehzahltechnisch möglichen Gängen zugeordnet. Anderenfalls wird der Gang nicht der Menge an drehzahltechnisch möglichen Gängen zugeordnet.

Bei 52 wird ausgehend von der Menge an drehzahltechnisch möglichen Gängen eine Menge an leistungstechnisch möglichen Gängen ermittelt. Dazu wird für alle drehzahltechnisch möglichen Gänge des Getriebes eine erzielbare Leistung bestimmt, die eine erzielbare Leistung und eine separat einzukoordinierende Lastpunktverschiebungsleistung berücksichtigt. Außerdem wird aus dem Radwunschmoment eine Wunschfahrleistung (gewünschte Fahrleistung) berechnet, zu dieser eine LPV-Wunschleistung (Lastpunktverschiebungswunschleistung) addiert und die Summe mit den erzielbaren Leistungen der unterschiedlichen Gänge verglichen. Wenn die Summe kleiner als die erzielbare Leistung oder gleich der erzielbaren Leistung eines Gangs ist, wird dieser Gang der Menge an leistungstechnisch möglichen Gängen zugeordnet. Wenn die Summe größer als die erzielbare Leistung eines Gangs ist, wird dieser Gang nicht der Menge an leistungstechnisch möglichen Gängen zugeordnet.

Bei 53 wird ausgehend von der Menge an drehzahl- und leistungstechnisch möglichen Gängen eine Menge an momententechnisch möglichen Gängen ermittelt. Dies erfolgt wie mit Bezug auf 31 und 32 in Fig. 3 beschrieben.

Bei 54 wird ausgehend von der Menge an drehzahl-, leistungs-, und momententechnisch möglichen Gängen eine verbrauchsabhängige Reihenfolge ermittelt und der effizienteste Gang zeitlich entprellt. Dies erfolgt wie mit Bezug auf 41 bis 44 in Fig. 5 beschrieben.

Bei 55 wird der ausgewählte Sollgang angewiesen. Dies erfolgt wie mit Bezug auf 34 in Fig. 3 beschrieben.

### Bezugszeichenliste

- 1: Antriebsstrang
- 10: Verbrennungskraftmaschine
- 11: Kurbelwelle
- 12: Elektroantrieb
- 13: Trennkupplung
- 14: Getriebe
- 15: Antriebsachse
- 16: Rad
- 2: Getriebesteuerung
- 20: Signalleitung
- 21: Signaleingang
- 3: Verfahren zum Auswählen eines Gangs eines Getriebe
- 30: Empfangen eines Radwunschmoments
- 31: Bestimmen eines erzielbaren Radmoments in jedem Gang
- 32: Ermitteln einer Menge an momententechnisch möglichen Gängen
- 33: Auswählen eines Sollgangs
- 34: Anweisen des Sollgangs
- 4: Verfahren zum Auswählen eines Gangs eines Getriebe
- 40: Empfangen eines Radwunschmoments
- 41: Bestimmen eines Gesamtkraftstoffverbrauchs für jeden Gang
- 42: Ermitteln des Gangs mit dem geringsten Gesamtkraftstoffverbrauch
- 43: Prüfen, ob der aktuelle Gang dem Gang mit dem geringsten Gesamtkraftstoffverbrauch entspricht
- 44: zeitliche Entprellung
- 45: Anweisen des Sollgangs
- 5: Verfahren zum Auswählen eines Gangs eines Getriebe
- 50: Empfangen eines Radwunschmoments
- 51: Ermitteln einer Menge an drehzahltechnisch möglichen Gängen
- 52: Ermitteln einer Menge an drehzahl- und leistungstechnisch möglichen Gängen
- 53: Ermitteln einer Menge an drehzahl-, leistungs- und momententechnisch möglichen Gängen
- 54: zeitliche Entprellung
- 55: Anweisen des Sollgangs

- v: Fahrgeschwindigkeit
- PWG: Fahrpedalstellung
- HS: Hochschaltlinie
- RS: Rückschaltlinie
- M_{RW}: Radwunschmoment
- M_{G1},:
- M_{G2}: erzielbares Radmoment in den Gängen "1" bzw. "2"
- M_{RS}: Rückschaltmoment (Mangelakzeptanz)
- Mₘₐₓ: Zugkrafthyperbel
- VV: Verbrauchsvorteil
- T_{W}: Verweildauer

## Patentansprüche

1. Verfahren zum Wählen eines Ganges eines Getriebes (14) in einem Antriebsstrang (1) eines Kraftfahrzeugs, umfassend:
Erhalten (30, 40, 50) einer von einer Fahrpedalstellung abhängigen Größe;
Berechnen (31, 41, 51) eines Antriebsstrangparameters für wenigstens zwei Gänge des Getriebes;
Ermitteln (32, 53) von Gängen, die eine vorgegebene Bedingung erfüllen, aus den wenigstens zwei Gängen des Getriebes (14);
Berechnen (54) mindestens eines weiteren Antriebsstrangparameters auf Grundlage der von einer Fahrpedalstellung abhängigen Größe für die Gänge der wenigstens zwei Gänge des Getriebes, die die vorgegebene Bedingung erfüllen; und
Auswählen (33, 44, 54) eines Sollgangs auf Grundlage des berechneten Antriebsstrangparameter für die wenigstens zwei Gänge und des berechneten mindestens einen weiteren Antriebsstrangparameter für die Gänge der wenigstens zwei Gänge des Getriebes, die die vorgegebene Bedingung erfüllen, unter Berücksichtigung der von der Fahrpedalstellung abhängigen Größe.

2. Verfahren nach Anspruch 1, wobei die von einer Fahrpedalstellung abhängige Größe ein Radwunschmoment (M_{RW}) oder eine Wunsch-Fahrleistung ist.

3. Verfahren nach Anspruch 1 oder 2, wobei beim Berechnen (31, 41, 51) der Antriebsstrangparameter ein aktueller Zustand des Kraftfahrzeugs und/oder ein Sollzustand des Kraftfahrzeugs berücksichtigt werden.

4. Verfahren nach einem der vorhergehenden Ansprüche, wobei beim Auswählen (33, 44, 54) des Sollgangs ein aktueller Zustand des Kraftfahrzeugs und/oder ein Sollzustand des Kraftfahrzeugs berücksichtigt werden.

5. Verfahren nach einem der vorhergehenden Ansprüche, wobei beim Berechnen (31, 41, 51) der Antriebsstrangparameter eine Umgebungsbedingung des Kraftfahrzeugs und/oder eine Lastpunktverschiebung berücksichtigt wird.

6. Verfahren nach einem der vorhergehenden Ansprüche, wobei der berechnete Antriebsstrangparameter ein erzielbares Radmoment (M_{G1}, M_{G2}) des Antriebsstrangs, eine Antriebsdrehzahl des Antriebsstrangs (1), eine erzielbare Leistung des Antriebsstrangs (1) und/oder ein Primärenergieverbrauch des Antriebstrangs (1) ist.

7. Verfahren nach einem der vorhergehenden Ansprüche, wobei der berechnete Antriebsstrangparameter ein erzielbares Radmoment (M_{G1}, M_{G2}) des Antriebsstrangs (1) ist,
wobei das Ermitteln (32, 53) von Gängen umfasst:
Auswählen der Gänge, in denen das erzielbare Radmoment (M_{G1}, M_{G2}) größer oder gleich dem Radwunschmoment (M_{RW}) ist.

8. Verfahren nach einem der vorhergehenden Ansprüche, wobei der berechnete Antriebsstrangparameter ein erzielbares Radmoment (M_{G1}, M_{G2}) des Antriebsstrangs (1) ist,
wobei das Ermitteln (32, 53) von Gängen umfasst:
Auswählen der Gänge, in denen das erzielbare Radmoment (M_{G1}, M_{G2}) größer oder gleich dem Radwunschmoment (M_{RW}) ist,
Bestimmen eines Rückschaltmoments (M_{RS}) und/oder eines Hochschaltmoments auf Grundlage des Radwunschmoments (M_{RW}), und
Auswählen eines aktuellen Gangs, wenn das erzielbare Radmoment (M_{G1}, M_{G2}) in dem aktuellen Gang größer oder gleich dem Rückschaltmoment (M_{RS}) oder dem Hochschaltmoment ist.

9. Verfahren nach einem der vorhergehenden Ansprüche, wobei
der berechnete Antriebsstrangparameter ein Primärenergiebedarf des Antriebsstrangs (1) ist,
wobei eine Reihenfolge der wenigstens zwei Gänge in Abhängigkeit des berechneten Primärenergiebedarfs bestimmt wird (42, 54) und
wobei auf Grundlage der bestimmten Reihenfolge der wenigstens zwei Gänge derjenige Gang, der den geringsten Primärenergiebedarf aufweist, als Sollgang ausgewählt wird (33, 44, 54).

10. Verfahren nach Anspruch 9, wobei der Gang, der den geringsten Primärenergiebedarf aufweist, als Sollgang ausgewählt wird, wenn ein aktueller Gang länger als eine vorgegebene Verweildauer (Tw) einen höheren Primärenergiebedarf aufweist als der Gang mit dem geringsten Primärenergiebedarf und/oder wenn durch Prädiktion bestimmt wird, dass der Gang mit dem geringsten Primärenergiebedarf für eine vorgegebene Zeitspanne der Gang mit dem geringsten Energiebedarf bleiben wird.

11. Verfahren nach Anspruch 10, wobei die vorgegebene Verweildauer (Tw) und/oder die vorgegebene Zeitspanne von einem Unterschied des geringsten Primärenergiebedarfs zu einem Primärenergiebedarf für einen aktuellen Gang abhängig ist.

12. Verfahren nach einem der Ansprüche 9 bis 11, wobei
der Primärenergiebedarf auf Grundlage eines Bedarfs an elektrischer Energie und eines Bedarfs an chemischer Energie bestimmt wird, wobei der Bedarf an elektrischer Energie mittels eines Umrechnungsfaktors in einen Bedarf an chemischer Energie umgerechnet wird, wobei der Umrechnungsfaktor konstant ist oder abhängig von einem aktuellen Zustand des Kraftfahrzeugs variiert.

13. Verfahren nach einem der vorhergehenden Ansprüche, weiterhin umfassend:
Bestimmen (54) einer Reihenfolge der Gänge, die die vorgegebene Bedingung erfüllen, in Abhängigkeit der berechneten weiteren Antriebsstrangparameter,
wobei der Sollgang auf Grundlage der bestimmten Reihenfolge der Gänge ausgewählt wird (54).

14. Steuervorrichtung (2) zum Wählen eines Ganges eines Getriebes (14) in einem Antriebsstrang (1) eines Kraftfahrzeugs, wobei die Steuervorrichtung (2) dazu ausgebildet ist, ein Verfahren zum Wählen eines Ganges eines Getriebes (14) in einem Antriebsstrang (1) eines Kraftfahrzeugs nach einem der vorhergehenden Ansprüche auszuführen.

## Claims

1. Method for selecting a gear ratio of a gearbox (14) in a drivetrain (1) of a motor vehicle, comprising:
receiving (30, 40, 50) a variable dependent on an accelerator pedal position;
calculating (31, 41, 51) a drivetrain parameter for at least two gear ratios of the gearbox;
ascertaining (32, 53), out of the at least two gear ratios of the gearbox (14), gear ratios that satisfy a predefined condition;
calculating (54) at least one further drivetrain parameter on the basis of the variable, which is dependent on an accelerator pedal position, for the gear ratios of the at least two gear ratios of the gearbox that satisfy the predefined condition; and
selecting (33, 44, 54) a setpoint gear ratio on the basis of the calculated drivetrain parameter for the at least two gear ratios and on the basis of the calculated at least one further drivetrain parameter for the gear ratios of the at least two gear ratios of the gearbox that satisfy the predefined condition, taking into consideration the variable that is dependent on the accelerator pedal position.

2. Method according to Claim 1, wherein the variable that is dependent on an accelerator pedal position is a wheel demand torque (M_{RW}) or a demanded drive power.

3. Method according to Claim 1 or 2, wherein a present state of the motor vehicle and/or a setpoint state of the motor vehicle are taken into consideration in the calculation (31, 41, 51) of the drivetrain parameters.

4. Method according to any of the preceding claims, wherein a present state of the motor vehicle and/or a setpoint state of the motor vehicle are taken into consideration in the selection (33, 44, 54) of the setpoint gear ratio.

5. Method according to any of the preceding claims, wherein an ambient condition of the motor vehicle and/or a load point shift is taken into consideration in the calculation (31, 41, 51) of the drivetrain parameters.

6. Method according to any of the preceding claims, wherein the calculated drivetrain parameter is an attainable wheel torque (M_{G1}, M_{G2}) of the drivetrain, a drive rotational speed of the drivetrain (1), an attainable power of the drivetrain (1) and/or a primary energy consumption of the drivetrain (1).

7. Method according to any of the preceding claims, wherein the calculated drivetrain parameter is an attainable wheel torque (M_{G1}, M_{G2}) of the drivetrain (1),
wherein the ascertainment (32, 53) of gear ratios comprises:
selecting the gear ratios in which the attainable wheel torque (M_{G1}, M_{G2}) is greater than or equal to the wheel demand torque (M_{Rw}).

8. Method according to any of the preceding claims, wherein the calculated drivetrain parameter is an attainable wheel torque (M_{G1}, M_{G2}) of the drivetrain (1),
wherein the ascertainment (32, 53) of gear ratios comprises:
selecting the gear ratios in which the attainable wheel torque (M_{G1}, M_{G2}) is greater than or equal to the wheel demand torque (M_{Rw}),
determining a downshift torque (M_{RS}) and/or an upshift torque on the basis of the wheel demand torque (M_{RW}), and
selecting a present gear ratio if the attainable wheel torque (M_{G1}, M_{G2}) in the present gear ratio is greater than or equal to the downshift torque (M_{RS}) or the upshift torque.

9. Method according to any of the preceding claims, wherein
the calculated drivetrain parameter is a primary energy demand of the drivetrain (1),
wherein a sequence of the at least two gear ratios is determined (42, 54) in a manner dependent on the calculated primary energy demand, and
wherein, on the basis of the determined sequence of the at least two gear ratios, that gear ratio which has the lowest primary energy demand is selected (33, 44, 54) as setpoint gear ratio.

10. Method according to Claim 9, wherein that gear ratio which has the lowest primary energy demand is selected as setpoint gear ratio if a present gear ratio has, for longer than a predefined dwell time (T_{W}), a higher primary energy demand than the gear ratio with the lowest primary energy demand and/or if it is determined by prediction that the gear ratio with the lowest primary energy demand will, for a predefined period of time, remain the gear ratio with the lowest energy demand.

11. Method according to Claim 10, wherein the predefined dwell time (T_{W}) and/or the predefined period of time is dependent on a difference between the lowest primary energy demand and a primary energy demand for a present gear ratio.

12. Method according to any of Claims 9 to 11, wherein the primary energy demand is determined on the basis of a demand for electrical energy and a demand for chemical energy, wherein the demand for electrical energy is converted, by means of a conversion factor, into a demand for chemical energy, wherein the conversion factor is constant or varies in a manner dependent on a present state of the motor vehicle.

13. Method according to any of the preceding claims, furthermore comprising:
determining (54), in a manner dependent on the calculated further drivetrain parameters, a sequence of the gear ratios that satisfy the predefined condition,
wherein the setpoint gear ratio is selected (54) on the basis of the determined sequence of the gear ratios.

14. Control device (2) for selecting a gear ratio of a gearbox (14) in a drivetrain (1) of a motor vehicle, wherein the control device (2) is designed to carry out a method for selecting a gear ratio of a gearbox (14) in a drivetrain (1) of a motor vehicle according to any of the preceding claims.

## Revendications

1. Procédé destiné à sélectionner un rapport d'une transmission (14) dans un groupe motopropulseur (1) d'un véhicule automobile, comprenant les étapes consistant à :
obtenir (30, 40, 50) une grandeur dépendant d'une position de pédale d'accélérateur ;
calculer (31, 41, 51) un paramètre de groupe motopropulseur pour au moins deux rapports de la transmission ;
établir (32, 53) des rapports qui satisfont une condition prédéfinie parmi les au moins deux rapports de la transmission (14) ;
calculer (54) au moins un autre paramètre de groupe motopropulseur sur la base de la grandeur dépendant de la position de pédale d'accélérateur pour les rapports des au moins deux rapports de la transmission qui satisfont la condition prédéfinie ; et
sélectionner (33, 44, 54) un rapport de consigne sur la base du paramètre de groupe motopropulseur calculé pour les au moins deux rapports et sur la base dudit au moins un autre paramètre de groupe motopropulseur calculé pour les rapports des au moins deux rapports de la transmission qui satisfont la condition prédéfinie, en tenant compte de la grandeur dépendant de la position de pédale d'accélérateur.

2. Procédé selon la revendication 1, dans lequel la grandeur dépendant d'une position de pédale d'accélérateur est un couple de roue souhaité (M_{RW}) ou une performance de conduite souhaitée.

3. Procédé selon la revendication 1 ou 2, dans lequel un état actuel du véhicule automobile et/ou un état de consigne du véhicule automobile est/sont pris en considération lors du calcul (31, 41, 51) des paramètres de groupe motopropulseur.

4. Procédé selon l'une quelconque des revendications précédentes, dans lequel un état actuel du véhicule automobile et/ou un état de consigne du véhicule automobile est/sont pris en considération lors de la sélection (33, 44, 54) du rapport de consigne.

5. Procédé selon l'une quelconque des revendications précédentes, dans lequel une condition d'environnement du véhicule automobile et/ou un décalage de point de charge est/sont pris(e) en considération lors du calcul (31, 41, 51) des paramètres de groupe motopropulseur.

6. Procédé selon l'une quelconque des revendications précédentes, dans lequel le paramètre de groupe motopropulseur calculé est un couple de roue réalisable (M_{G1}, M_{G2}) du groupe motopropulseur, une vitesse de rotation d'entraînement du groupe motopropulseur (1), une puissance réalisable du groupe motopropulseur (1) et/ou une consommation d'énergie primaire du groupe motopropulseur (1).

7. Procédé selon l'une quelconque des revendications précédentes, dans lequel le paramètre de groupe motopropulseur calculé est un couple de roue réalisable (M_{G1}, M_{G2}) du groupe motopropulseur (1),
l'établissement (32, 53) de rapports comprenant :
la sélection des rapports pour lesquels le couple de roue réalisable (M_{G1}, M_{G2}) est supérieur ou égal au couple de roue souhaité (M_{RW}).

8. Procédé selon l'une quelconque des revendications précédentes, dans lequel le paramètre de groupe motopropulseur calculé est un couple de roue réalisable (M_{G1}, M_{G2}) du groupe motopropulseur (1), l'établissement (32, 53) de rapports comprenant :
la sélection des rapports pour lesquels le couple de roue réalisable (M_{G1}, M_{G2}) est supérieur ou égal au couple de roue souhaité (M_{RW}),
la détermination d'un couple de passage à un rapport inférieur (M_{RS}) et/ou d'un couple de passage à un rapport supérieur sur la base du couple de roue souhaité (M_{RW}), et
la sélection d'un rapport actuel si le couple de roue réalisable (M_{G1}, M_{G2}) avec le rapport actuel est supérieur ou égal au couple de passage à un rapport inférieur (M_{RS}) ou au couple de passage à un rapport supérieur.

9. Procédé selon l'une quelconque des revendications précédentes, dans lequel
le paramètre de groupe motopropulseur calculé est une demande en énergie primaire du groupe motopropulseur (1),
une séquence des aux moins deux rapports est déterminée (42, 54) en fonction de la demande en énergie primaire calculée, et
sur la base de la séquence déterminée des au moins deux rapports, le rapport qui présente la plus petite demande en énergie primaire est sélectionné (33, 44, 54) en tant que rapport de consigne.

10. Procédé selon la revendication 9, dans lequel le rapport qui présente la plus petite demande en énergie primaire est sélectionné en tant que rapport de consigne si un rapport actuel présente pendant plus longtemps qu'une durée de temporisation prédéfinie (Tw) une demande en énergie primaire plus élevée que le rapport ayant la plus petite demande en énergie primaire, et/ou s'il est déterminé par prédiction que le rapport ayant la plus petite demande en énergie primaire restera le rapport ayant la plus petite demande en énergie pendant une période prédéfinie.

11. Procédé selon la revendication 10, dans lequel la durée de temporisation (T_{W}) et/ou la période prédéfinie dépend(ent) d'une différence entre la plus petite demande en énergie primaire et une demande en énergie primaire pour un rapport actuel.

12. Procédé selon l'une quelconque des revendications 9 à 11, dans lequel la demande en énergie primaire est déterminée sur la base d'une demande en énergie électrique et d'une demande en énergie chimique, la demande en énergie électrique étant convertie au moyen d'un facteur de conversion en une demande en énergie chimique, le facteur de conversion étant constant ou variable en fonction d'un état actuel du véhicule automobile.

13. Procédé selon l'une quelconque des revendications précédentes, comprenant en outre :
la détermination (54) d'une séquence des rapports qui satisfont la condition prédéfinie en fonction des autres paramètres de groupe motopropulseur calculés,
le rapport de consigne étant sélectionné (54) sur la base de la séquence des rapports.

14. Dispositif de commande (2) destiné à sélectionner un rapport d'une transmission (14) dans un groupe motopropulseur (1) d'un véhicule automobile, le dispositif de commande (2) étant réalisé pour effectuer un procédé destiné à sélectionner un rapport d'une transmission (14) dans un groupe motopropulseur (1) d'un véhicule automobile selon l'une quelconque des revendications précédentes.
